# EUROPEAN PATENT APPLICATION

(11) **EP 4 543 012 A1**
(43) Date of publication of application: **23.04.2025**
(21) Application number: 23826533.4
(22) Date of filing: 21.06.2023
(51) Int. Cl.: H04N 21/233

(54) **MULTIMEDIA DATA PROCESSING METHOD AND APPARATUS, AND COMPUTER-READABLE STORAGE MEDIUM**

(30) Priority: 24.06.2022 CN 202210722924
(71) Applicant: ZTE Corporation, Shenzhen, Guangdong 518057 (CN)
(72) Inventor: HUI, Yi, Shenzhen, Guangdong 518057 (CN)
(74) Representative: Savi, Massimiliano
(86) International application number: PCT/CN2023/101786
(87) International publication number: WO 2023/246888

(57) **Abstract**

Disclosed in the present application are a multimedia data processing method and apparatus, and a computer-readable storage medium. The method comprises: acquiring an audio stream and a video stream of multimedia data (S 100); parsing the audio stream to obtain text feature data, and matching the text feature data according to a preset mapping relationship, so as to determine topic feature data (S200); parsing the video stream to obtain expression feature data, and comparing the matching expression feature data according to a preset mapping relationship, so as to determine an emotion index (S300); and rendering the multimedia data on the basis of the text feature data, the emotion index and the topic feature data (S400).

## Description

### CROSS-REFERENCE TO RELATED APPLICATION

This application is filed on the basis of Chinese patent application No. 202210722924.7 filed June 24, 2022, and claims priority to the Chinese patent application, the entire contents of which are incorporated herein by reference.

### TECHNICAL FIELD

Embodiments of the present disclosure relate to, but not limited to, the technical field of data processing, and more particularly, to a multimedia data processing method and apparatus, and a computer-readable storage medium.

### BACKGROUND

With the globalization of the economy, cross-regional business communication is becoming increasingly frequent. Currently, remote business meetings are primarily conducted through video conferencing systems. Participants exchange audio, video, and documents via transmission lines and multimedia devices, enabling real-time, interactive communication. The advancement of Augmented Reality (AR) technology, combined with the introduction of high-throughput and low-latency deterministic networks in 5G technologies, has brought high-performance processing potential for video calls and even AR scenarios. Moreover, at the service level, more effective meeting auxiliary information also needs to be mined from data channels in business video conferences. However, mainstream business conference call products currently focus on providing video/voice call control and media channel services, lacking multi-dimensional analysis, mining, and secondary processing of channel data, and failing to effectively mine and utilize media data.

### SUMMARY

The following is a summary of the subject matter set forth in this description. This summary is not intended to limit the scope of protection of the claims.

Embodiments of the present disclosure provide a multimedia data processing method and apparatus, and a computer-readable storage medium.

In accordance with a first aspect of the present disclosure, an embodiment provides a multimedia data processing method, including: acquiring an audio stream and a video stream of multimedia data; parsing the audio stream to obtain text feature data, and matching the text feature data according to a preset mapping relationship to determine topic feature data; parsing the video stream to obtain expression feature data, and matching the expression feature data according to a preset mapping relationship to determine an emotion index; and rendering the multimedia data based on the text feature data, the emotion index, and the topic feature data.

In accordance with a second aspect of the present disclosure, an embodiment provides a multimedia service data processing apparatus, including: an audio processing module, configured for receiving and parsing an audio stream to obtain text feature data; a video processing module, configured for receiving and parsing a video stream to obtain expression feature data; a mapping module, configured for processing the text feature data to obtain topic feature data, and processing the expression feature data to obtain an emotion index; and a rendering module, configured for rendering the text feature data, the topic feature data, and the emotion index with the video stream.

In accordance with a third aspect of the present disclosure, an embodiment provides an electronic device, including: a memory, a processor, and a computer program stored in the memory and executable by the processor, where the computer program, when executed by the processor, causes the processor to implement the multimedia data processing method in accordance with the first aspect.

In accordance with a fourth aspect of the present disclosure, an embodiment provides a computer-readable storage medium, storing a computer-executable program which, when executed by a computer, causes the computer to implement the multimedia data processing method in accordance with the first aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a main flowchart of a multimedia data processing method according to an embodiment of the present disclosure;
FIG. 2A is a detailed flowchart of a multimedia data processing method according to an embodiment of the present disclosure;
FIG. 2B is a detailed flowchart of parsing an audio stream to obtain text feature data according to an embodiment of the present disclosure;
FIG. 3A is a detailed flowchart of a multimedia data processing method according to an embodiment of the present disclosure;
FIG. 3B is a schematic diagram of micro-expressions according to an embodiment of the present disclosure;
FIG. 3C is a detailed flowchart of parsing the video stream to obtain expression feature data according to an embodiment of the present disclosure;
FIG. 3D is a schematic diagram of a mapping relationship between a preset micro-expression combination and an emotion index according to an embodiment of the present disclosure;
FIG. 4A is a detailed flowchart of a multimedia data processing method according to an embodiment of the present disclosure;
FIG. 4B is a schematic diagram of a mapping relationship between a preset key phrase and a scenario template according to an embodiment of the present disclosure;
FIG. 4C is a detailed flowchart of a multimedia data processing method according to an embodiment of the present disclosure;
FIG. 4D is a schematic diagram of a mapping relationship between a preset declaration statement and a command sequence according to an embodiment of the present disclosure;
FIG. 4E is a schematic diagram of a command sequence type according to an embodiment of the present disclosure;
FIG. 5A is a detailed flowchart of a multimedia data processing method according to an embodiment of the present disclosure;
FIG. 5B is a schematic diagram of a mapping relationship between a preset sensitive statement and a rendering set according to an embodiment of the present disclosure;
FIG. 6 is a schematic structural diagram of a multimedia data processing apparatus according to an embodiment of the present disclosure; and
FIG. 7 is a schematic structural diagram of an electronic device according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

It should be understood that in the description of the embodiments of the present disclosure, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first", "second", and the like are merely used for distinguishing technical features, and are not intended to indicate or imply relative importance, or implicitly point out the number of the indicated technical features, or implicitly point out the precedence order of the indicated technical features

With the globalization of the economy, cross-regional business communication is becoming increasingly frequent. Currently, remote business meetings are primarily conducted through video conferencing systems. Participants exchange audio, video, and documents via transmission lines and multimedia devices, enabling real-time, interactive communication. The development of AR technology and the emergence of high-throughput and low-latency deterministic networks in 5G technologies have brought high-performance processing potential for video calls and even AR scenarios. The development of AR, VR, and XR technologies enable remote communication technologies to achieve an effect that is getting closer to those of face-to-face conversations on business trips. Although the advert of XR devices has transformed the original one-dimensional voice calls and two-dimensional video calls to three-dimensional space calls, media data cannot be effectively mined and utilized. At present, mainstream call products only provide video/voice call control and media channel services, and there are very few products that can perform multi-dimensional analysis of channel data. At the service level, more effective meeting auxiliary information also needs to be mined from data channels in business video conferences.

In addition, with the continuous development of communication data channels and data processing capabilities, the idea of communication operators providing capability exposure platforms and introducing third-party developers to provide diversified services has a long history. However, in practice, capability exposure platforms deployed by operators still have not achieved the expected results. In fact, these exposed capabilities can perform only some simple control over the original voice and video calls, and have not made breakthrough in user experience.

To overcome the shortcomings of conventional video call products and meet service requirements, embodiments of the present disclosure provide a multimedia data processing method and apparatus, and a computer-readable storage medium. The method includes: acquiring an audio stream and a video stream of multimedia data; parsing the audio stream to obtain text feature data, and matching the text feature data according to a preset mapping relationship to determine topic feature data; parsing the video stream to obtain expression feature data, and matching the expression feature data according to a preset mapping relationship to determine an emotion index; and rendering the multimedia data based on the text feature data, the emotion index, and the topic feature data. Based on this, in the present disclosure, by parsing, extraction, intelligent analysis, and rendering enhancement of multimedia information of a multi-person call, multi-dimensional value information including voice text and emotion index is mined based on voice and video of existing call products, and secondary processing is further performed on a content of the voice text according a preset mapping relationship, such that the call product can present richer and more intelligent information. In addition, by presetting different mapping relationships, different business scenarios and conversation contents can be flexibly processed, and the range of application of technical schemes can be expanded. This effectively explores the potential value of call products, brings a brand-new call experience, and increases the competitiveness of the service user, enabling the service user to improve decision-making efficiency, win more voice rights, and effectively seize business opportunities.

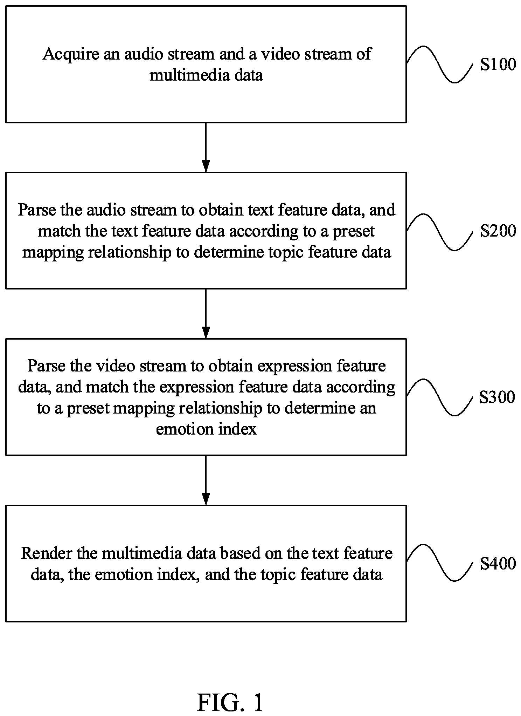

FIG. 1 is a flowchart of a multimedia data processing method according to an embodiment of the present disclosure. The multimedia data processing method includes, but not limited to, the following steps S100 to S400.

At S 100, an audio stream and a video stream of multimedia data are acquired.

At S200, the audio stream is parsed to obtain text feature data, and the text feature data is matched according to a preset mapping relationship to determine topic feature data.

At S300, the video stream is parsed to obtain expression feature data, and the expression feature data is matched according to a preset mapping relationship to determine an emotion index.

At S400, the multimedia data is rendered based on the text feature data, the emotion index, and the topic feature data.

It can be understood that a remote business conference is conducted in a video call mode, and at least two parties of the conference exchange and transmit on-site multimedia information with each other via a network. The transmitted multimedia information includes audio and video. In this technical scheme, first, an audio stream and a video stream of multimedia data are acquired, and sound in the audio stream is parsed and extracted to obtain text feature data. For example, the sound in the audio stream may be a human voice, and the human voice is converted to text, i.e., language text, by speech recognition technology. Similarly, the sound in the audio stream may be a non-human voice. In this case, a corresponding sound type, name, feature, etc., may be identified according to a frequency spectrum of the sound, and a name or action corresponding to the sound may be converted to a text description. For example, the sound of a musical instrument may be identified as a piano music, and the text feature data may include the piano music, a name of the piano music, information related to the piano music, etc. Then, the video stream in the multimedia data is parsed to obtain expression feature data. The expression feature data includes expressions of participants in the video call. For example, faces in the video are analyzed by recognizing consecutive frames in the video stream, dynamic changes of facial expressions are extracted, and different expression feature data is generated for different expressions. For example, an angry expression of a face is recognized, and the expression feature data is generated by a combination of forms of eyebrows, eyes, cheeks, noses, lips, etc.

It can be understood that in the step of matching the text feature data according to the preset mapping relationship to determine topic feature data, the preset mapping relationship may be a mapping relationship between some text feature data and topic feature data, i.e., a mapping relationship between some text phrases and topic keywords. Alternatively, the preset mapping relationship may be a mapping relationship between text phrases and some action commands. For example, a text phrase is matched as a search action, and if the matching is successful, the phrase is searched, and the search result is determined as the topic feature data. Alternatively, the preset mapping relationship may be a multi-level mapping relationship, i.e., a mapping relationship is set between a preset text phrase and the topic keyword, a mapping relationship is further set between the topic keyword and an action command, and a mapping relationship is further set between the action command and another action command. As such, through the setting of the multi-level mapping relationship, the topic feature data is obtained through multiple levels of mapping conversion and action processing according to the text feature data. Therefore, a text phrase in the text feature data is matched against the preset text phrases in the mapping relationship, and if a degree of matching between the text phase in the text feature data and one of the preset text phrases reaches a preset threshold, the keyword mapped to the preset text phrase that matches the text phrase in the text feature data is determined as the topic feature data according to the preset mapping relationship. In some embodiments, the text feature data may contain a whole text, and during text matching, the text in the text feature data is dispersed into phrases or words, and the dispersed phrases or words are matched against the preset text phrases, respectively. The preset threshold may be understood as a proportion of the dispersed phrases or words in the text feature data that match the preset text phrases. An appropriate range of the preset threshold may be tested stepwise by setting numerical values of different granularity, or whether the threshold setting is appropriate may be determined according to the recognition effect. Similarly, in the step of matching the expression feature data according to the preset mapping relationship to determine the emotion index, the preset mapping relationship is a mapping relationship between some expression feature data and emotion indexes, i.e., a mapping relationship between expressions extracted from the video stream and emotion indexes. The emotion index may be expressed in the form of color, numerical value, graph, etc. For example, scores of emotions from anger to happiness are set to 0 to 100, 0 indicating very angry, and 100 indicating very happy. Corresponding emotion indexes are set for different expressions. As such, the expressions extracted from the video stream may be mapped to the corresponding scores. Similarly, the emotion index may be expressed in the form of color. Different colors correspond to different emotions. According to color psychology, warm colors represent boldness, sunshine, enthusiasm, warmth, and liveliness, while cold colors represent elegance, femininity, calmness, and elegance. Therefore, red may be set to represent warmth, vigor, and impulse. Orange may be set to represent joy and happiness. Yellow may be set to represent pride. Green may be set to represent peace. Blue may be set to represent coldness, calmness, sanity, and ruthlessness. Purple may be set to represent dreamy. Black and white may be set to represent terror, despair, sadness, and sublimity. Gray may be set to represent calmness. By mapping different emotional expressions to different colors according to color psychology, an expression extracted from the video stream is respectively compared with preset expressions, and if a degree of matching between the expression extracted from the video stream and one of the preset expressions reaches a preset threshold, the color mapped to the preset expression that matches the expression in the expression feature data is determined as the emotion index according to the preset mapping relationship. Similarly, the emotion index may be expressed in the form of a graph, and the perfection of the graphic is used to express the change of emotion. No more examples will be given herein. The expression feature data may include expression changes within a period of time, and may include a combination of a plurality of expressions. The preset threshold may be understood as a proportion of expressions in a combination of a plurality of expressions that match the preset expressions. An appropriate range of the preset threshold may be tested stepwise by setting numerical values of different granularity, or whether the threshold setting is appropriate may be determined according to the recognition effect.

It can be understood that the multimedia data is rendered based on the text feature data, the emotion index, and the topic feature data. The text feature data is speech text obtained by conversion of speech in the audio stream. The emotion index is an index of an emotion of a speaker in the conference. The speech text is matched against preset text, and topic feature data mapped to the matching preset text according to the mapping relationship is determined as the topic feature data. Alternatively, the topic feature data is obtained through multiple levels of mapping of the matching preset text and execution of an action. Therefore, the multimedia data is rendered based on the text feature data, the emotion index, and the topic feature data. As such, the text feature data is rendered into the video to become the subtitles of the conference. The emotion index is rendered into the video to show the emotional state of the participants in real time to facilitate timely adjustment of the topic or conference content according to the emotions of the participants. The topic feature data is rendered into the video as secondary processing of key information of the conference, to improve the efficiency of the conference. Considering that the participants have different knowledge levels or there is information asymmetry between the participants, relevant content of related topics can be displayed in a timely manner through secondary processing and rendering of the key information, such that participants can promptly grasp the content of the conference. For example, the text feature data obtained from the audio stream, the topic feature data (i.e., the secondarily processed content) obtained through mapping or multiple levels of mapping of the text feature data, and the emotion index obtained from the video stream are respectively rendered with the multimedia data, to obtain a video stream, which not only includes the picture content of the conference, but also includes multi-dimensional auxiliary information. The video stream is returned to a media plane router and transferred to a conference site through a transmission system. The multimedia data is parsed and presented at the conference site through an XR device. According to the 3GPP specification, this technical scheme may be deployed in a router or media processing network element, or may be deployed independently. The participants can view the original video information, hear the original audio information, and at the same time, can view the voice subtitles and emotion indexes of the relevant participants, and instantly view a summary of related topics or a presentation of related information. In a conference discussing a topic of financial security, a number of phrases containing finance-related information are extracted from the text feature data. The extracted phrases are matched against preset finance-related phrases, such as stock market, a name of a listed company, a financial report of the listed company, an insurance company, the China Securities Regulatory Commission, etc. When a preset threshold is reached, for example, when 10 phrases or keywords have been successfully matched within a period of time, the successfully matched phrases or keywords are mapped. The mapping content may be corresponding topic keywords, or may be a content obtained through multiple levels of actions. For example, the successfully matched keywords include a name of a listed company and financial data, and the preset phrase is mapped to an action of "searching for its revenue data in the past two years". Therefore, the content mapped to the matched keywords including the name of the listed company and financial data is searching for revenue data of the corresponding listed company in the past two years, and at the conference site, the revenue data of the corresponding listed company in the past two years is immediately displayed in a space, allowing the participants to grasp the topic content more efficiently. It should be noted that a mapping relationship for various scenarios and topics may be preset, and the mapping relationship may be a multi-level mapping relationship. In addition, the mapping relationship may include keywords, and may also include actions to be executed. The mapping relationship may also include multiple levels of actions. The mapping relationship may be continuously optimized through a lot of training and accumulation to achieve greater accuracy and intelligence. Alternatively, the level of association accuracy and intelligence of the mapping relationship may be determined according to the length of time the participant pays visual attention to the content on site, thereby realizing automatic optimization of the mapping relationship and automatic entry and update of the mapping relationship.

It can be understood that the mapping relationship includes at least one of: a mapping relationship between a preset micro-expression combination and an emotion index: a mapping relationship between a preset key phrase and a scenario template; a mapping relationship between a preset declaration statement and a command sequence; and a mapping relationship between a preset sensitive statement and a rendering set. With the setting of the mapping relationships of multiple dimensions, data processing can be performed using the mapping relationships of different dimensions according to information of the different dimensions during information processing.

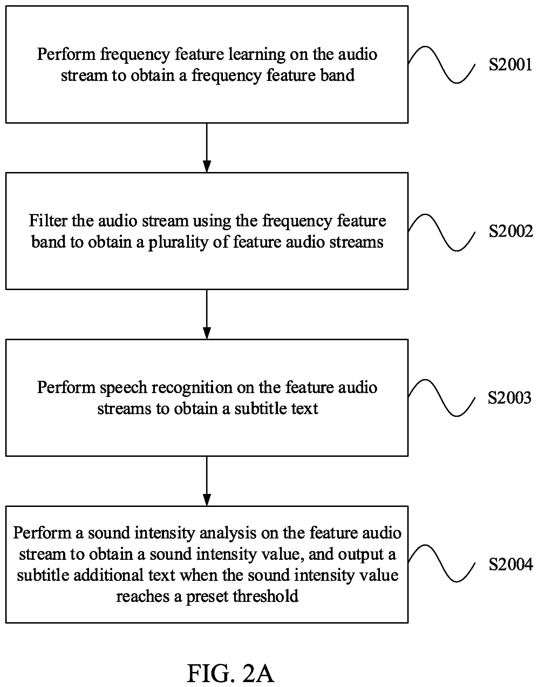

As shown in FIG. 2A, S200 may include, but not limited to, the following steps S2001 to S2004.

At S2001, frequency feature learning is performed on the audio stream to obtain a frequency feature band.

At S2002, the audio stream is filtered using the frequency feature band to obtain a plurality of feature audio streams.

At S2003, speech recognition is performed on the feature audio streams to obtain a subtitle text.

At S2004, a sound intensity analysis is performed on the feature audio stream to obtain a sound intensity value, and a subtitle additional text is outputted when the sound intensity value reaches a preset threshold.

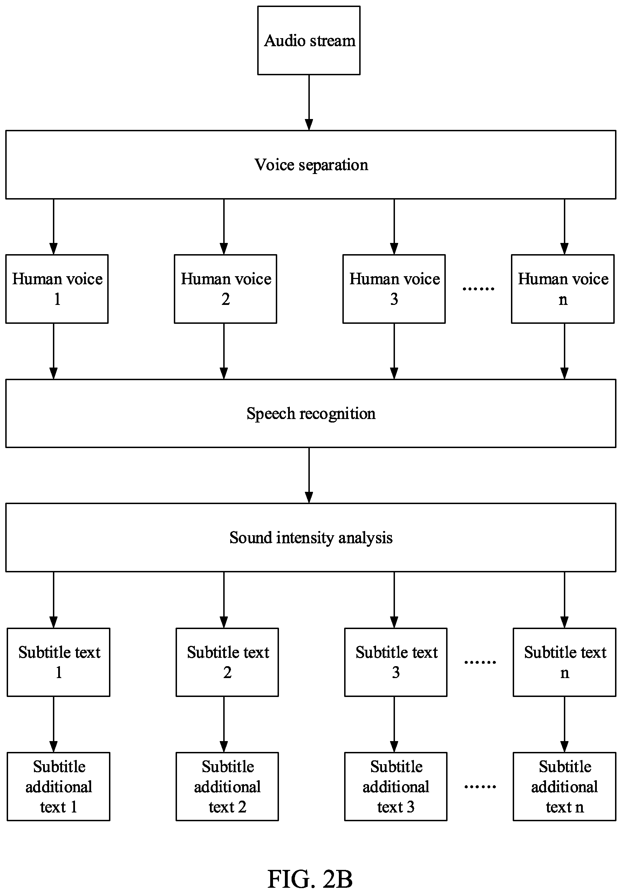

It can be understood that as shown in FIG. 2B, frequency feature learning is performed on the audio stream, i.e., frequency features of different human voices are learned, to obtain frequency feature bands, i.e., frequency bands to which the frequency features of the different human voices belong. The audio stream is filtered according to the feature data to obtain a plurality of feature audio streams, i.e., the human voices are separated from the audio streams. Further, voices of different persons in the human voices are separated to obtain audio information corresponding to respective human voices. Speech recognition is performed on the feature audio streams to obtain subtitle texts corresponding to the human voices. A sound intensity analysis is performed on the audio stream to obtain a sound intensity value. In some embodiments, a pitch height or sound magnitude of the audio information corresponding to the respective human voices is analyzed, and when the sound intensity value exceeds a preset threshold, a subtitle additional text corresponding to the respective human voices is outputted, i.e., phrases or keywords whose pitch or volume exceeds a preset value are outputted.

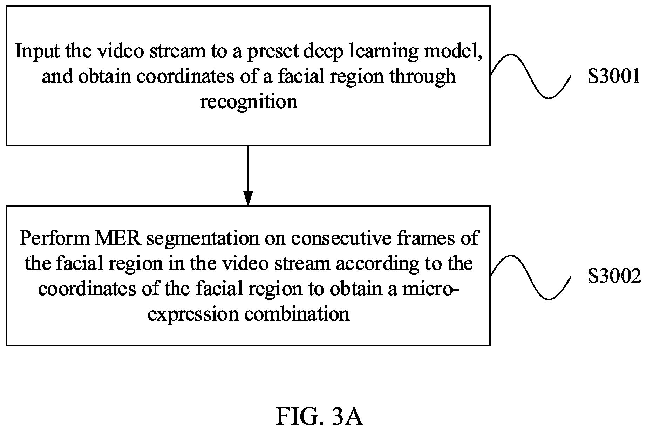

As shown in FIG. 3A, S300 may include, but not limited to, the following steps S3001 to S3002.

At S3001, the video stream is inputted to a preset deep learning model, and coordinates of a facial region are obtained through recognition.

At S3002, Micro Expression Recognition (MER) segmentation is performed on consecutive frames of the facial region in the video stream according to the coordinates of the facial region to obtain a micro-expression combination.

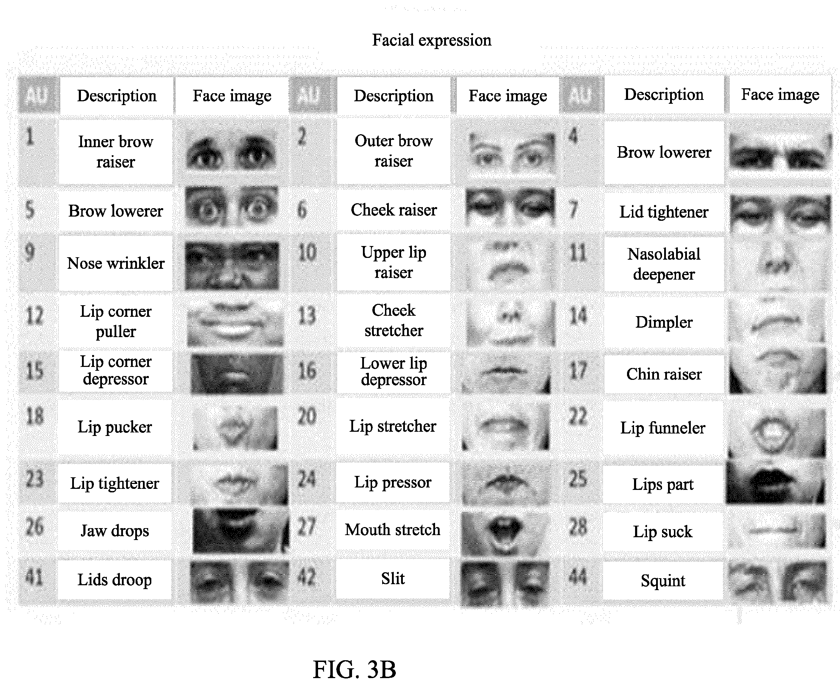

As shown in FIG. 3B, a facial expression involves movements of a plurality of parts of a face. "Micro-expression" is a term relative to "macro expression". A macro expression is usually easy to observe and lasts for 0.5 to 4 seconds, and the facial muscle groups involved in facial expression movements contract or relax greatly. A micro-expression cannot be controlled by thoughts or consciousness, and lasts for such a short moment that a person has not time to control it with consciousness. Therefore, micro-expressions reflect real emotions to a certain extent. Because of this characteristic, micro-expressions have very important applications in criminal investigation, security, justice, negotiation, and other fields. A micro-expression is a special facial expression, and has the following characteristics compared with ordinary expressions.
1. The micro-expression lasts for a short moment, usually only 1/25 to 1/3 seconds.
2. The micro-expression has low motion intensity, making it difficult to perceive.
3. The micro-expression is generated in an unconscious state, and is usually difficult to conceal or disguise.
4. The analysis of micro-expressions usually needs to be implemented in videos, while ordinary expressions can be analyzed in images.

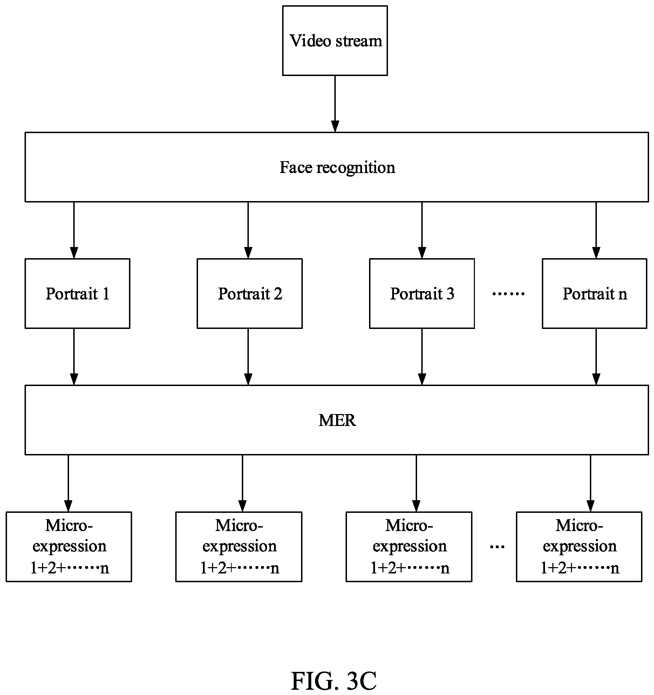

The recognition of micro-expressions was initially trained manually, which took about one and a half hours to improve the accuracy to 30%-40%, but psychologists have demonstrated that the highest accuracy of manual recognition will not exceed 47%. Later, as psychological experiments gradually involve computer applications, combinations of Action Units (AU) are applied to micro-expressions. For example, a macro expression corresponding to happiness is AU6+AU12, and a micro expression corresponding to happiness is AU6, or AU12, or AU6+AU12. In addition, micro-expression involves a local muscle movement, rather than the simultaneous movement of two muscles. For example, the micro expression corresponding to happiness involves movement of AU6 or AU12. However, if the intensity of the micro expression is high, AU6 and AU12 may occur at the same time. In addition, there is an association between macro expressions and micro expressions, i.e., an AU of a micro expression may be a subset of AUs of a macro expression. Therefore, micro expressions may be extracted from a video through MER. Through the combination of micro-expressions, the expression changes of the participants can be accurately described, and the emotional changes of the participants can be indirectly reflected. Based on this, the interest of the participants in the topic being discussed can be further analyzed. Therefore, as shown in FIG. 3C, the video stream is inputted to a preset deep learning model. In some embodiments, a Convolutional Neural Networks (CNN) model may be used for learning and training to obtain a mature CNN model. Then, the video stream is inputted into the CNN model for face recognition, to obtain coordinates of a facial region and coordinates of regions corresponding to faces of participants of the conference in the video. An MER segmentation module is used to perform MER segmentation on consecutive frames of the facial regions in the video. Further conduct MER sequence analysis, and changes of continuous time series pictures are outputted to obtain a combination sequence of micro-expression AUs, i.e., a micro-expression combination.

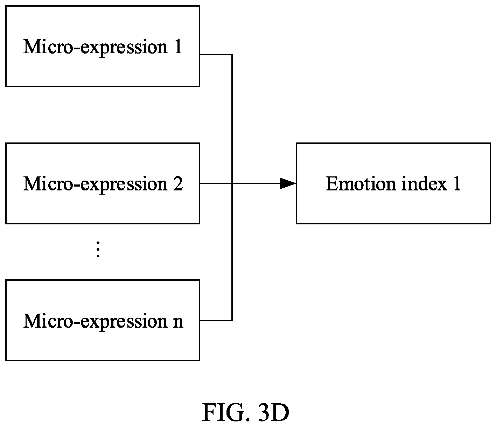

It can be understood that FIG. 3D shows a mapping relationship between a micro-expression combination and an emotion index. The micro-expression combination includes a plurality of micro-expressions, for example, micro-expression 1, micro-expression 2, and micro-expression 3. The micro expression 1 is AU6, the micro expression 2 is AU7, and the micro expression 3 is AU12, i.e., the micro expression combination is AU6+AU7+AU12. Similarly, the micro expressions may be arranged and combined to obtain a set of micro expression combinations, which are mapped to corresponding emotion indexes according to emotions expressed by the micro expression combinations. Therefore, expressions of a participant in the video stream are extracted to obtain a micro expression combination, and an emotion index is obtained according to the mapping relationship between the micro-expression combination and the emotion index. The emotion index may be expressed in the form of color, numerical value, graph, etc. For example, scores of emotions from anger to happiness are set to 0 to 100, 0 indicating very angry, and 100 indicating very happy. Corresponding emotion indexes are set for different expressions. As such, the expressions extracted from the video stream can be mapped to the corresponding scores. Similarly, the emotion index may be expressed in the form of color. Different colors correspond to different emotions. According to color psychology, warm colors represent boldness, sunshine, enthusiasm, warmth, and liveliness, while cold colors represent elegance, femininity, calmness, and elegance. Therefore, red may be set to represent warmth, vigor, and impulse. Orange may be set to represent joy and happiness. Yellow may be set to represent pride. Green may be set to represent peace. Blue may be set to represent coldness, calmness, sanity, and ruthlessness. Purple may be set to represent dreamy. Black and white may be set to represent terror, despair, sadness, and sublimity. Gray may be set to represent calmness. By mapping micro-expression combinations to different colors according to color psychology, the micro-expression combinations can be mapped to emotion indexes.

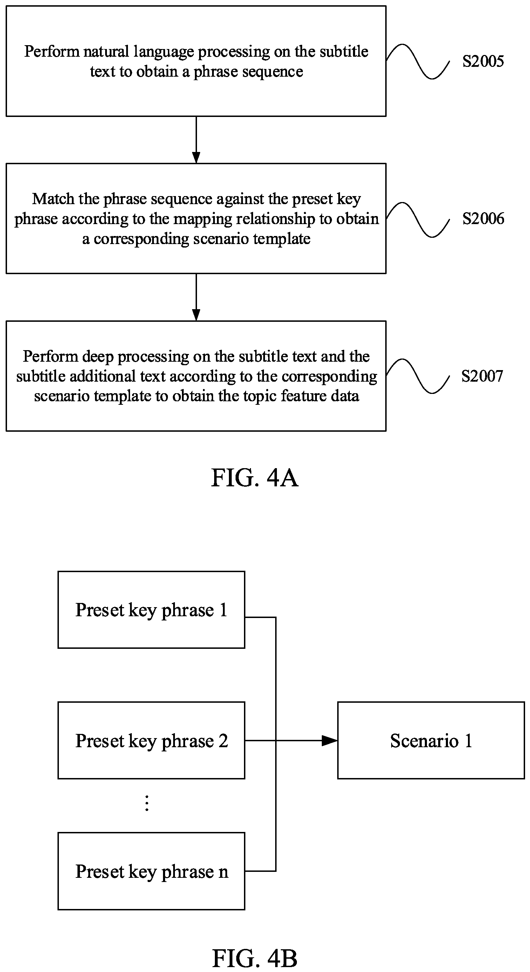

As shown in FIG. 4A, S200 further includes, but not limited to, the following steps S2005 to S2007.

At S2005, natural language processing is performed on the subtitle text to obtain a phrase sequence.

At S2006, the phrase sequence is matched against the preset key phrase according to the mapping relationship to obtain a corresponding scenario template.

At S2007, deep processing is performed on the subtitle text and the subtitle additional text according to the corresponding scenario template to obtain the topic feature data.

It can be understood that semantic processing is performed on the subtitle text. In some embodiments, the subtitle text is segmented into a plurality of phrase sequences according to semantics through natural language processing, the phrase sequences are matched against preset key phrases according to the mapping relationship, and when a degree of the matching reaches a preset threshold, a corresponding scenario template is obtained.

As shown in FIG. 4B, in the mapping relationship between the preset key phrase and the scenario template, at least one preset key phrase is mapped to one scenario. For example, a topic scenario in the financial field is preset, and preset key phrases include Shanghai Composite Index, secondary market, Shanghai Stock Exchange, Shenzhen Stock Exchange, capital inflow and outflow of Shanghai Stock Exchange, Shenzhen Stock Exchange, A-share, and the six preset key phrases are mapped to a financial scenario. The subtitle text extracted from the audio stream of the video conference is segmented into a plurality of phrase sequences according to semantics. The phrase sequences are compared with the six preset key phrases to calculate a similarity. When the similarity reaches a preset threshold, it is determined that the current conference topic is a financial topic, and the financial scenario is entered. Deep processing is performed on the subtitle text and the subtitle additional text according to the corresponding scenario template to obtain the topic feature data. In some embodiments, in the financial scenario, according to the preset mapping relationship, the subtitle text and the subtitle additional text are further semantically segmented and compared with preset statements to obtain an action instruction for data processing. Through the mapped action, secondary processing is performed on the subtitle text and the subtitle additional text, and a result of the secondary processing is outputted and rendered. It should be noted that the threshold may be set according to strictness of scenario matching and the number of preset key phrases. For example, in the same scenario, a larger number of preset key phrases and a higher required matching degree indicate a higher threshold and a greater difficulty in finding a matching scenario, but indicate higher accuracy. Therefore, an appropriate range of the threshold can be found through a lot of data training, to strike a balance between accuracy and practicality. It should be noted that in this scheme, a plurality of scenarios are preset, a plurality of preset key phrases are mapped to one scenario, and scenarios of different dimensions and levels may be set and applied to different types of conference themes.

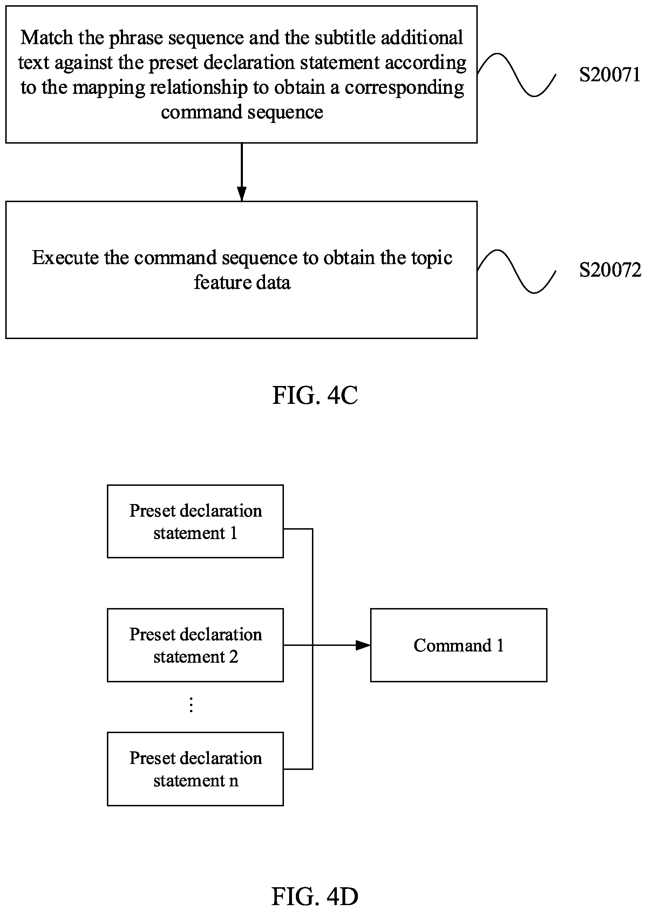

As shown in FIG. 4C, S2007 further includes, but not limited to, the following steps S20071 to S20072.

At S20071, the phrase sequence and the subtitle additional text are matched against the preset declaration statement according to the mapping relationship to obtain a corresponding command sequence.

At S20072, the command sequence is executed to obtain the topic feature data.

It can be understood that the phrase sequence and the subtitle additional text are matched against the preset declaration statement according to the mapping relationship i.e., the mapping relationship between the preset declaration statement and the command sequence, to obtain a corresponding command sequence.

As shown in FIG. 4D, in the mapping relationship between the preset declaration statement and the command sequence, at least one preset declaration statement is mapped to one command sequence. The command sequence includes an action group, i.e., a plurality of data processing actions. For example, a topic scenario in the field of 5G communication is preset, preset key statements include 5G networking, Non-Standalone (NSA) networking, Standalone (SA) networking, control and bearer separation, mobile edge computing, and network slicing, and the six preset key statements are mapped to a 5G communication scenario. The subtitle text extracted from the audio stream of the video conference is segmented into a plurality of phrase sequences according to semantics. The phrase sequences are compared with the six preset key phrases to calculate a similarity. When the similarity reaches a preset threshold, it is determined that the current conference topic is a 5G communication topic, and the 5G communication scenario is entered. In the 5G communication scenario, matching and mapping are further performed on the subtitle text and the subtitle additional text. In some embodiments, the phrase sequence and the subtitle additional text are matched against the preset declaration statement according to the mapping relationship between the preset declaration statement and the command sequence, to obtain a corresponding command sequence. For example, there are five preset declaration statements including the number of 5G patents, 5G standard essential patents, the number of 5G patents held, 5G technology companies, and 5G market size, and the five preset declaration statements are mapped to a command sequence which may be set to include the following actions 1 to 4.

Action 1: Search the preset declaration statement by using a search engine.

Action 2: Extract content introductions or keywords of the first five URLs in the search result.

Action 3: Extract keywords from a patent database search web page.

Action 4: Output the search result after de-duplication.

The command sequence includes four actions. According to this mapping relationship, the phrase sequences are compared with the five preset declaration statements in the 5G communication scenario. When the similarity reaches a preset value, it is determined that the matching is successful. In this case, the command sequence mapped to the preset declaration statement is executed, i.e., the four actions are executed. Finally, a result of the actions is outputted. It should be noted that the threshold may be set according to strictness of matching and the number of preset declaration statements. For example, in the same command sequence, a larger number of preset declaration statements and a higher required matching degree indicate a higher threshold and a greater difficulty in finding a matching command sequence, but indicate higher accuracy. Therefore, an appropriate range of the threshold can be found through a lot of data training, to strike a balance between accuracy and practicality. It should be noted that in this scheme, a plurality of command sequences are preset, a plurality of preset declaration statements are mapped to one command sequence, and command sequences of different dimensions and levels may be set and applied to different types of secondary data processing scenarios.

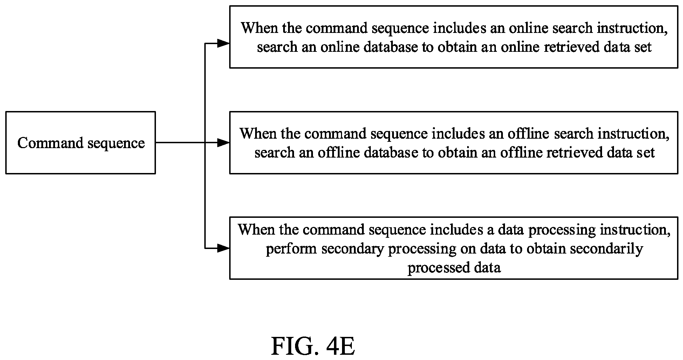

As shown in FIG. 4E, S20071 further includes, but not limited to, at least one of the following actions:
when the command sequence includes an online search instruction, searching an online database to obtain an online retrieved data set;
when the command sequence includes an offline search instruction, searching an offline database to obtain an offline retrieved data set; and
when the command sequence includes a data processing instruction, performing secondary processing on data to obtain secondarily processed data.

The online search database may be one or a combination of more than one of Google search engine, Baidu search engine, Bing search engine, Sogou search engine, Haosou search engine, Shenma search engine, and Yahoo search engine. Definitely, search engines in specific professional fields, such as special databases in the patent search field, special databases in the literature search field, etc., may also be used. The offline database is a local database, which may be an internal database in a local area network, and may be flexibly set according to the field to which this technical scheme is applied or the user's own database. When the command sequence includes a data processing instruction, secondary processing is performed on data. The secondary processing may be implemented by performing multiple levels of mapping and performing multiple times of processing on the data from multiple dimensions according to the mapping relationship.

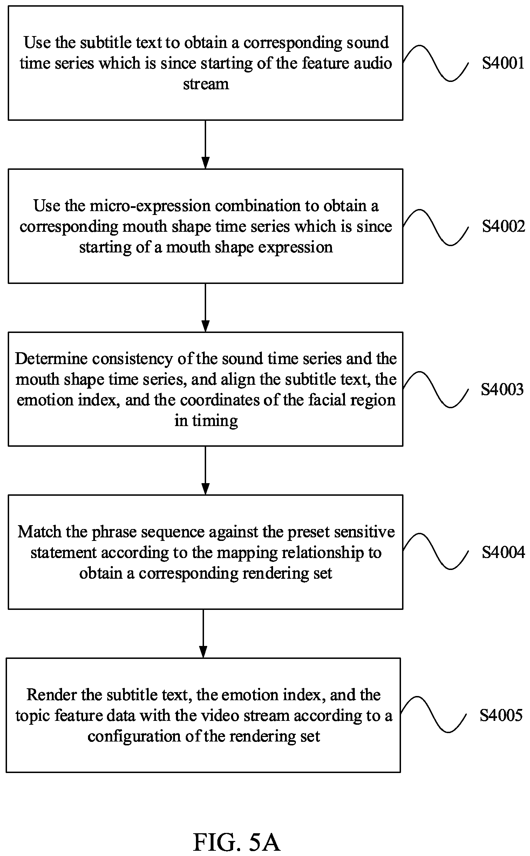

As shown in FIG. 5A, S400 further includes, but not limited to, the following steps S4001 to S4005.

At S4001, the subtitle text is used to obtain a corresponding sound time series which is since starting of the feature audio stream.

At S4002, the micro-expression combination is used to obtain a corresponding mouth shape time series which is since starting of a mouth shape expression.

At S4003, consistency of the sound time series and the mouth shape time series is determined, and the subtitle text, the emotion index, and the coordinates of the facial region are aligned in timing.

At S4004, the phrase sequence is matched against the preset sensitive statement according to the mapping relationship to obtain a corresponding rendering set.

At S4005, the subtitle text, the emotion index, and the topic feature data are rendered with the video stream according to a configuration of the rendering set.

It can be understood that the subtitle text is used to obtain a corresponding sound time series which is since starting of the feature audio stream, where the subtitle text has a timestamp when being extracted, so time corresponding to the text can be determined. The micro-expression combination is used to obtain a corresponding mouth shape time series which is since starting of a mouth shape expression. Micro-expressions are extracted from the video stream according to a time series sequence, so the micro-expression combination also has a timestamp. In addition, the video stream and the audio stream are from the same multimedia source and have the same timing. However, because the audio stream and the video stream are separately processed and secondary data processing is performed, data timing of the audio stream and data timing of the video stream may become asynchronous after data processing. Therefore, consistency of the sound time series and the mouth shape time series is determined, and the subtitle text, the emotion index, and the coordinates of the facial region are aligned in timing. The subtitle text corresponds to the sound time series, the emotion index corresponds to the mouth shape time series, and the coordinates of the facial region correspond to the mouth shape time series. When it is determined that the sound time series is consistent with the mouth shape time series, it indicates that the subtitle text, the emotion index, and the coordinates of the facial region are also aligned in time series.

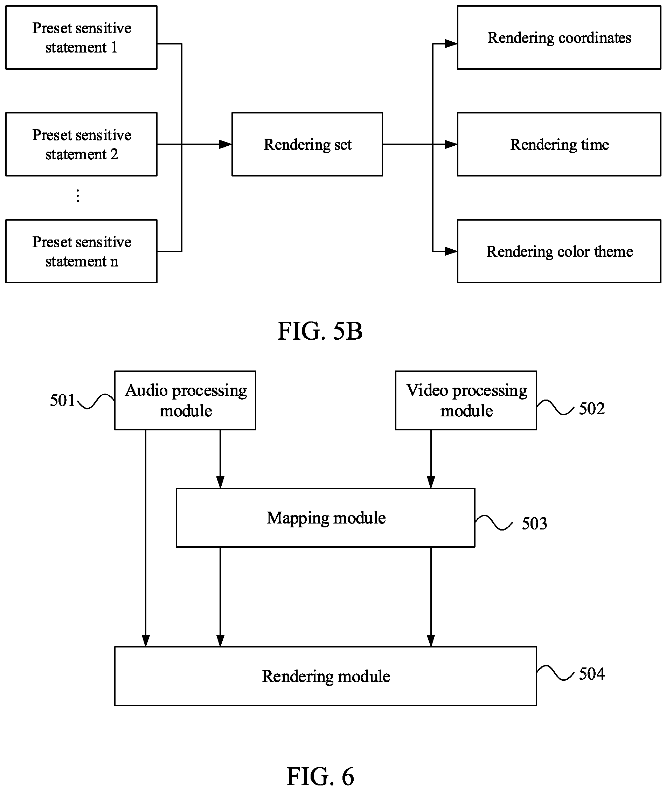

As shown in FIG. 5B, the phrase sequence is matched against the preset sensitive statement according to the mapping relationship to obtain a corresponding rendering set. A mapping relationship is set between preset sensitive statements and rendering sets. At least one preset sensitive statement is mapped to one rendering set. Preset sensitive statements of different dimensions may be preset as a matching reference according to a requirement of a usage scenario.

The configuration of the rendering set includes at least one of rendering coordinates, rendering time, and a rendering color theme. A visual effect presented by rendering the subtitle text, the emotion index, and the topic feature data with the video stream varies with different rendering sets. For example, in an XR conference, according to different configurations of the rendering set, after the subtitle text, the emotion index, and the topic feature data are rendered with the video stream, participants of the conference will see subtitle text in different colors, emotion indexes of different styles, and topic feature data corresponding to different display time in vicinity of faces of different persons. A participant can see, in vicinity of each speaker in an XR device, subtitles corresponding to speech of the speaker and displayed in the form of a display board or bullet comment, as well as an emotion index of the speaker. The key information during the conference is fed back to a visual space after secondary processing. The display duration, font color, and display position of the key information vary with the level of the key information. The key information may be presented in the form of an icon, numerical number, or other designs. In addition, different keywords or statements may be grouped into different groups through a management interface, corresponding processing actions may be set for the groups, and different rendering effects may be set for the groups.

As shown in FIG. 6, an embodiment of the present disclosure provides a multimedia data processing apparatus. By parsing, extraction, intelligent analysis, and rendering enhancement of multimedia information of a multi-person call, multi-dimensional value information including voice text and emotion index may be mined based on voice and video of existing call products, and secondary processing may be further performed on a content of the voice text according a preset mapping relationship, such that the call product can present richer and more intelligent information. In addition, by presetting different mapping relationships, different business scenarios and conversation contents can be flexibly processed, and the range of application of technical schemes can be expanded. This effectively explores the potential value of call products, brings a brand-new call experience, and increases the competitiveness of the service user, enabling the service user to improve decision-making efficiency, win more voice rights, and effectively seize business opportunities.

The multimedia data processing apparatus includes:
an audio processing module 501, configured for receiving audio data, parsing and extracting sound in the audio stream to obtain text feature data;
a video processing module 502, configured for receiving video data, and parsing the video stream to obtain expression feature data, where the expression feature data includes expressions of participants in the video call, faces in the video are analyzed by recognizing consecutive frames in the video stream, dynamic changes of facial expressions are extracted, and different expression feature data is generated for different expressions;
a mapping module 503, configured for converting the text feature data to topic feature data and converting the expression feature data to an emotion index according to a preset mapping relationship; and
a rendering module 504, configured for rendering the text feature data, the emotion index, and the topic feature data for output.

In an implementation, the audio processing module receives an audio stream, parses and extracts sound in the audio stream to obtain text feature data; the video processing module receives a video stream, and parses the video stream to obtain expression feature data, where the expression feature data includes expressions of participants in the video call, faces in the video are analyzed by recognizing consecutive frames in the video stream, dynamic changes of facial expressions are extracted, and different expression feature data is generated for different expressions; the mapping module converts the text feature data to topic feature data and converts the expression feature data to an emotion index according to a preset mapping relationship; and the rendering module renders the text feature data, the emotion index, and the topic feature data for output. Based on this, in the present disclosure, by parsing, extraction, intelligent analysis, and rendering enhancement of multimedia information of a multi-person call, multi-dimensional value information including voice text and emotion index is mined based on voice and video of existing call products, and secondary processing is further performed on a content of the voice text according a preset mapping relationship, such that the call product can present richer and more intelligent information. In addition, by presetting different mapping relationships, different business scenarios and conversation contents can be flexibly processed, and the range of application of technical schemes can be expanded. This effectively explores the potential value of call products, brings a brand-new call experience, and increases the competitiveness of the service user, enabling the service user to improve decision-making efficiency, win more voice rights, and effectively seize business opportunities.

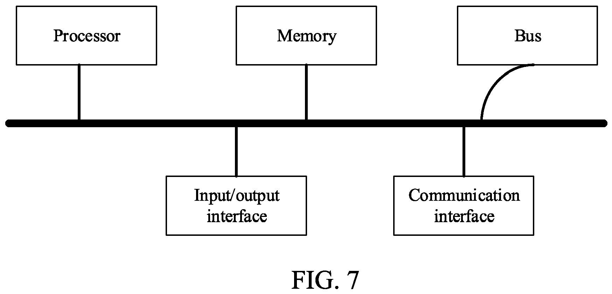

As shown in FIG. 7, an embodiment of the present disclosure provides an electronic device. By parsing, extraction, intelligent analysis, and rendering enhancement of multimedia information of a multi-person call, multi-dimensional value information including voice text and emotion index may be mined based on voice and video of existing call products, and secondary processing may be further performed on a content of the voice text according a preset mapping relationship, such that the call product can present richer and more intelligent information. In addition, by presetting different mapping relationships, different business scenarios and conversation contents can be flexibly processed, and the range of application of technical schemes can be expanded. This effectively explores the potential value of call products, brings a brand-new call experience, and increases the competitiveness of the service user, enabling the service user to improve decision-making efficiency, win more voice rights, and effectively seize business opportunities.

The electronic device includes a processor, a memory, an input/output interface, a communication interface, and a bus.

The processor may be implemented by a general-purpose Central Processing Unit (CPU), a microprocessor, an Application Specific Integrated Circuit (ASIC), or one or more integrated circuits, and is configured to execute a related program to implement the technical schemes provided by the embodiments of the present disclosure.

The memory may be implemented in the form of a Read Only Memory (ROM), a static storage device, a dynamic storage device, a Random Access Memory (RAM), etc. The memory may store an operating system and other application programs. When the technical schemes provided by the embodiments of the present disclosure are implemented by software or firmware, related program code is stored in the memory, and is called by the processor to execute the multimedia data processing method according to the embodiments of the present disclosure.

The input/output interface is configured to enable input and output of information.

The communication interface is configured to realize communication interaction between the electronic device and other devices, either through wired communication (e.g., USB, network cable, etc.) or through wireless communication (e.g., mobile network, Wi-Fi, Bluetooth, etc.).

The bus is configured to transmit information between components of the electronic device (such as the processor, the memory, the input/output interface, and the communication interface).

The processor, the memory, the input/output interface, and the communication interface are in communication connection with each other inside the electronic device through the bus.

In an implementation, the electronic device includes one or more processors and one or more memories. FIG. 7 uses one processor and one memory as an example. The processor and the memory may be connected by a bus or in other ways. Connection by a bus is used as an example in FIG. 7.

The memory, as a non-transitory computer-readable storage medium, may be configured for storing a non-transitory software program and a non-transitory computer-executable program, for example, the multimedia data processing method in the embodiments of the present disclosure. The non-transitory software program and the non-transitory computer-executable program stored in the memory, when executed by the processor, cause the processor to implement the multimedia data processing method in the embodiments of the present disclosure.

The memory may include a program storage area and a data storage area. The program storage area may store an operating system, and an application required by at least one function. The data storage area may store data and the like required for executing the multimedia data processing method in the embodiments of the present disclosure. In addition, the memory may include a high-speed RAM, and may also include a non-transitory memory, e.g., at least one magnetic disk storage device, flash memory device, or other non-transitory solid-state storage device. In some implementations, the memory includes memories located remotely from the processor, and the remote memories may be connected to the multimedia data processing apparatus via a network. Examples of the network include, but not limited to, the Internet, an intranet, a local area network, a mobile communication network, and combinations thereof.

The non-transitory software program and the non-transitory computer-executable program required for implementing the multimedia data processing method in the embodiments of the present disclosure are stored in the memory which, when executed by one or more processors, cause the one or more processors to implement the multimedia data processing method in the embodiments of the present disclosure, for example, implement the method steps S100 to S400 in FIG. 1A, the method steps S2001 to S2004 in FIG. 2A, the method steps S3001 to S3002 in FIG. 3A, or the method steps S2005 to S2007 in FIG. 4A. In some embodiments, the method includes: acquiring an audio stream and a video stream of multimedia data; parsing the audio stream to obtain text feature data, and matching the text feature data according to a preset mapping relationship to determine topic feature data; parsing the video stream to obtain expression feature data, and matching the expression feature data according to a preset mapping relationship to determine an emotion index; and rendering the multimedia data based on the text feature data, the emotion index, and the topic feature data. Based on this, in the present disclosure, by parsing, extraction, intelligent analysis, and rendering enhancement of multimedia information of a multi-person call, multi-dimensional value information including voice text and emotion index is mined based on voice and video of existing call products, and secondary processing is further performed on a content of the voice text according a preset mapping relationship, such that the call product can present richer and more intelligent information. In addition, by presetting different mapping relationships, different business scenarios and conversation contents can be flexibly processed, and the range of application of technical schemes can be expanded. This effectively explores the potential value of call products, brings a brand-new call experience, and increases the competitiveness of the service user, enabling the service user to improve decision-making efficiency, win more voice rights, and effectively seize business opportunities.

In addition, an embodiment of the present disclosure provides a computer-readable storage medium, storing a computer-executable program. The computer-executable program, when executed by one or more control processors, for example, by a processor in FIG. 7, may cause the one or more processors to implement the multimedia data processing method in the embodiments of the present disclosure, for example, implement the method steps S100 to S400 in FIG. 1A, the method steps S2001 to S2004 in FIG. 2A, the method steps S3001 to S3002 in FIG. 3A, or the method steps S2005 to S2007 in FIG. 4A. In some embodiments, the method includes: acquiring an audio stream and a video stream of multimedia data; parsing the audio stream to obtain text feature data, and matching the text feature data according to a preset mapping relationship to determine topic feature data; parsing the video stream to obtain expression feature data, and matching the expression feature data according to a preset mapping relationship to determine an emotion index; and rendering the multimedia data based on the text feature data, the emotion index, and the topic feature data. Based on this, in the present disclosure, by parsing, extraction, intelligent analysis, and rendering enhancement of multimedia information of a multi-person call, multi-dimensional value information including voice text and emotion index is mined based on voice and video of existing call products, and secondary processing is further performed on a content of the voice text according a preset mapping relationship, such that the call product can present richer and more intelligent information. In addition, by presetting different mapping relationships, different business scenarios and conversation contents can be flexibly processed, and the range of application of technical schemes can be expanded. This effectively explores the potential value of call products, brings a brand-new call experience, and increases the competitiveness of the service user, enabling the service user to improve decision-making efficiency, win more voice rights, and effectively seize business opportunities.

Those having ordinary skills in the art can understand that all or some of the step in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as a computer-readable program, data structures, program modules, or other data). The computer storage medium includes, but not limited to, an RAM, an ROM, an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes a computer-readable program, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or replacements without departing from the scope of the present disclosure. Such equivalent modifications or replacements fall within the scope defined by the claims of the present disclosure.

## Claims

1. A multimedia data processing method, comprising:
acquiring an audio stream and a video stream of multimedia data;
parsing the audio stream to obtain text feature data, and matching the text feature data according to a preset mapping relationship to determine topic feature data;
parsing the video stream to obtain expression feature data, and matching the expression feature data according to a preset mapping relationship to determine an emotion index; and
rendering the multimedia data based on the text feature data, the emotion index, and the topic feature data.

2. The method of claim 1, wherein the mapping relationship comprises at least one of:
a mapping relationship between a preset micro-expression combination and an emotion index: or
a mapping relationship between a preset key phrase and a scenario template; or
a mapping relationship between a preset declaration statement and a command sequence; or
a mapping relationship between a preset sensitive statement and a rendering set.

3. The method of claim 2, wherein parsing the audio stream to obtain text feature data comprises:
performing frequency feature learning on the audio stream to obtain a frequency feature band;
filtering the audio stream using the frequency feature band to obtain a plurality of feature audio streams;
performing speech recognition on the feature audio streams to obtain a subtitle text; and
performing a sound intensity analysis on the feature audio stream to obtain a sound intensity value, and outputting a subtitle additional text in response to the sound intensity value reaching a preset threshold.

4. The method of claim 3, wherein parsing the video stream to obtain expression feature data comprises:
inputting the video stream to a preset deep learning model, and obtaining coordinates of a facial region through recognition; and
performing Micro Expression Recognition (MER) segmentation on consecutive frames of the facial region in the video stream according to the coordinates of the facial region to obtain a micro-expression combination.

5. The method of claim 4, wherein matching the expression feature data according to a preset mapping relationship to determine an emotion index comprises:
matching the micro-expression combination against the preset micro-expression combination according to the mapping relationship to obtain a corresponding emotion index.

6. The method of claim 3, wherein matching the text feature data according to a preset mapping relationship to determine topic feature data comprises:
performing natural language processing on the subtitle text to obtain a phrase sequence;
matching the phrase sequence against the preset key phrase according to the mapping relationship to obtain a corresponding scenario template; and
performing deep processing on the subtitle text and the subtitle additional text according to the corresponding scenario template to obtain the topic feature data.

7. The method of claim 6, wherein performing deep processing on the subtitle text and the subtitle additional text according to the corresponding scenario template to obtain the topic feature data comprises:
matching the phrase sequence and the subtitle additional text against the preset declaration statement according to the mapping relationship to obtain a corresponding command sequence; and
executing the command sequence to obtain the topic feature data.

8. The method of claim 7, wherein executing the command sequence to obtain the topic feature data comprises at least one of:
in response to the command sequence comprising an online search instruction, searching an online database to obtain an online retrieved data set; or
in response to the command sequence comprising an offline search instruction, searching an offline database to obtain an offline retrieved data set; or
in response to the command sequence comprising a data processing instruction, performing secondary processing on data to obtain secondarily processed data.

9. The method of any one of claims 4 to 8, wherein rendering the multimedia data based on the text feature data, the emotion index, and the topic feature data comprises:
using the subtitle text to obtain a corresponding sound time series which is since starting of the feature audio stream;
using the micro-expression combination to obtain a corresponding mouth shape time series which is since starting of a mouth shape expression;
determining consistency of the sound time series and the mouth shape time series, and aligning the subtitle text, the emotion index, and the coordinates of the facial region in timing;
matching the phrase sequence against the preset sensitive statement according to the mapping relationship to obtain a corresponding rendering set; and
rendering the subtitle text, the emotion index, and the topic feature data with the video stream according to a configuration of the rendering set.

10. The method of claim 9, wherein the configuration of the rendering set comprises at least one of:
rendering coordinates; rendering time; or a rendering color theme.

11. A multimedia data processing apparatus, comprising:
an audio processing module, configured for receiving and parsing an audio stream to obtain text feature data;
a video processing module, configured for receiving and parsing a video stream to obtain expression feature data;
a mapping module, configured for processing the text feature data to obtain topic feature data, and processing the expression feature data to obtain an emotion index; and
a rendering module, configured for rendering the text feature data, the topic feature data, and the emotion index with the video stream.

12. An electronic device, comprising: a memory, a processor, and a computer program stored in the memory and executable by the processor, wherein the computer program, when executed by the processor, causes the processor to perform the multimedia data processing method of any one of claims 1 to 10.

13. A computer-readable storage medium, storing a computer-executable program which, when executed by a computer, causes the computer to perform the multimedia data processing method of any one of claims 1 to 10.
